# FASCICULE DE BREVET EUROPEEN

(11) **EP 1 838 016 B1**
(45) Date de publication et mention de la délivrance du brevet: **16.07.2008**
(21) Numéro de dépôt: 07102686.8
(22) Date de dépôt: 20.02.2007
(51) Int. Cl.: H04B 10/20, G02B 6/40

(54) **Segment de câble à fibres optiques dérivable pour infrastructure de communication**
Optischer Kabelabschnitt mit Abzweigverbindungen für eine Kommunikationsinfrastruktur
Optical cable segment with tapping connections for a communications infrastructure

(30) Priorité: 21.03.2006 FR 0650962
(43) Date de publication de la demande: 26.09.2007
(73) Titulaire: SCHNEIDER ELECTRIC INDUSTRIES SAS, 92500 Rueil-Malmaison (FR)
(72) Inventeur: Perrin, Alain, 38500, Saint Nicolas De Macherin (FR); Schreiber, Sebastian, 13053, Berlin (DE); Bauer, Hannes, 44141, Dortmund (DE)
(74) Mandataire: Bié, Nicolas

(56) Documents cités:
- EP-A2- 0 332 945
- EP-A2- 1 193 895
- WO-A2-98/58465
- FR-A1- 2 507 031
- US-A1- 2005 265 672

## Description

La présente invention se rapporte à un segment de câble dérivable pour une infrastructure de communication, comportant plusieurs groupes de fibres optiques. L'invention concerne également une infrastructure de communication comportant au moins un segment de câble. L'infrastructure pourra comporter plusieurs segments connectés bout à bout.

Une infrastructure de communication informatique fonctionnant sous un protocole par exemple de type Ethernet, ATM ou Token Ring peut présenter plusieurs topologies différentes. Les topologies les plus connues sont celles en étoile, en bus ou en anneau.

Dans une topologie en étoile, des serveurs sont reliés à un concentrateur ("hub" en anglais) principal se développant par plusieurs branches en étoile vers plusieurs équipements secondaires auxquels des terminaux informatiques sont par exemple connectés directement ou par l'intermédiaire de commutateurs réseau ("switch" en anglais). Typiquement, dans une infrastructure locale, le concentrateur principal est implanté dans un local central d'un bâtiment et les équipements secondaires sont délocalisés dans des locaux situés au plus près des terminaux informatiques des utilisateurs finaux.

Les branches reliant le concentrateur principal aux équipements secondaires sont par exemple réalisées en fibres optiques. Par rapport à un câble coaxial ou à une paire torsadée, la fibre optique permet des débits bien plus élevés pouvant aller au-delà de 1 Giga Bit par seconde. En outre, elle présente de nombreux autres avantages liés notamment à l'immunité du signal le long de la fibre optique, à la fiabilité et à la sûreté de la transmission sur de longues distances.

Cependant, lorsqu'un nouvel équipement secondaire doit être installé et relié au concentrateur principal, la topologie en étoile oblige à tirer un nouveau câble en fibres optiques du concentrateur principal à l'équipement secondaire. Or, l'installation sur mesure d'un câble en fibres optiques est souvent onéreuse et doit être confiée à des spécialistes.

Une infrastructure de communication présentant une topologie en bus permet de remédier à ce problème. Dans une topologie en bus, un seul câble est connecté au concentrateur principal et ce câble présente plusieurs dérivations menant aux équipements secondaires. La quantité de câble à tirer entre le bus et les équipements secondaires est donc réduite et l'infrastructure est plus aisée à installer. Cependant, lorsque le câble est en fibres optiques, chaque dérivation effectuée sur les fibres optiques vers un équipement secondaire entraîne une atténuation du signal. De plus, actuellement, effectuer une dérivation sur un câble en fibres optiques s'avère techniquement difficile à mettre en oeuvre.

Le document de brevet EP-A2-1 193 895 décrit un segment de câble pour une infrastructure de communication, ledit segment comprenant plusieurs groupes de fibres optiques continues le long du segment, un groupe de fibres optiques dérivées et plusieurs coupleurs en étoile qui connectent les fibres optiques continues aux fibres optiques dérivées.

Le but de l'invention est donc de pouvoir construire une infrastructure de communication à base de fibres optiques de manière simple, c'est-à-dire sans tirer de nombreux câbles et sans faire appel à des spécialistes, tout en garantissant à l'utilisateur final une qualité de service optimale.

Ce but est atteint par un segment de câble dans une infrastructure de communication, comprenant :
- plusieurs groupes de fibres optiques, les groupes comportant chacun une même quantité de fibres optiques,
- un premier connecteur situé à une extrémité du segment, présentant des zones de connexion,
- un second connecteur situé à l'autre extrémité du segment présentant des zones de connexion complémentaires de celles du premier connecteur, les premiers et seconds connecteurs regroupant chacun l'ensemble des fibres optiques, caractérisé en ce que les groupes de fibres optiques comportent :
   - un ou plusieurs groupes de fibres optiques continues le long du segment,
   - un groupe de fibres optiques dérivées, chaque fibre optique de ce groupe étant interrompue une fois de manière à former un point de dérivation du segment, et en ce que
   - le premier connecteur présente une première zone de connexion reliée au groupe de fibres dérivées, la zone de connexion complémentaire à cette première zone de connexion sur le second connecteur étant reliée à un groupe de fibres continues,
   - le premier connecteur présente une deuxième zone de connexion reliée à un groupe de fibres continues, la zone de connexion complémentaire à cette deuxième zone de connexion sur le second connecteur étant reliée au groupe de fibres dérivées.

Une infrastructure de communication construite à partir de segments selon l'invention semble présenter une topologie en bus puisque chaque segment présente plusieurs points de dérivation. Cependant, cette infrastructure fonctionne en réalité selon une topologie en étoile. L'infrastructure selon l'invention comporte donc notamment les avantages liés à la facilité d'installation d'une topologie en bus mais également ceux liés à la qualité de service propre à une infrastructure en topologie en étoile.

Selon l'invention, le segment comporte plusieurs points de dérivation échelonnés le long du segment. La construction d'une infrastructure de communication informatique local est donc aisée, puisqu'elle est réalisée par simple aboutement de plusieurs segments. En outre, ajouter un équipement secondaire ne présente aucune difficulté car chaque segment dispose de points de dérivation prééquipés de connecteurs. La dérivation de la fibre optique permet ainsi d'amener un signal à un fort débit au moins jusqu'à l'équipement secondaire et donc au plus près du terminal de l'utilisateur final.

Selon une particularité, à chaque point de dérivation, la fibre optique interrompue présente deux terminaisons optiques réunies dans un connecteur commun.

Selon une autre particularité, au point de dérivation, la dérivation est réalisée perpendiculairement ou parallèlement au segment de fibres optiques.

Selon une autre particularité les premier et second connecteurs sont multi-fibres.

Selon une autre particularité, il comporte quatre groupes de six fibres optiques chacun.

Selon une autre particularité, l'infrastructure de communication est de type étoile simple.

Le but de l'invention est également de proposer une infrastructure de communication comportant au moins un concentrateur relié à une première extrémité d'une ligne de transmission comprenant au moins un segment de câble tel que défini ci-dessus, ledit concentrateur étant apte à envoyer des données sur chaque fibre optique de la ligne de transmission à des débits adaptés aux équipements secondaires potentiellement différents des uns des autres.

Selon une particularité, la ligne de transmission présente une seconde extrémité raccordée au concentrateur par un câble optique de transport.

Selon une autre particularité, la ligne de transmission présente une seconde extrémité à laquelle les groupes de fibres optiques sont raccordées deux par deux par l'intermédiaire d'un connecteur de bouclage.

Selon une autre particularité, le concentrateur comporte un connecteur multi-fibres pour connecter une extrémité de la ligne de transmission.

Selon une autre particularité, la ligne de transmission comporte plusieurs segments connectés bout à bout ou connectés entre eux par l'intermédiaire d'un ou plusieurs câbles de transport.

Cette infrastructure de communication est particulièrement adaptée pour fonctionner sous un protocole permettant le transfert de données par fibres optiques tel que par exemple Ethernet, ATM ou "Token Ring".

Selon une autre particularité, l'infrastructure est de type étoile simple.

Selon l'invention, l'emploi de segments du type décrit dans cette demande permet donc une grande modularité dans l'assemblage et l'installation d'une infrastructure de communication.

D'autres caractéristiques et avantages vont apparaître dans la description détaillée qui suit en se référant à un mode de réalisation donné à titre d'exemple et représenté par les dessins annexés sur lesquels :
- la figure 1 représente de manière schématique une infrastructure de communication selon l'invention,
- la figure 2 représente deux segments de câble selon l'invention mis bout à bout,
- la figure 3 représente de manière schématique une variante de l'infrastructure de communication selon l'invention,
- la figure 4 représente un connecteur de bouclage utilisable dans une infrastructure de communication selon l'invention,
- la figure 5 représente une variante du point de dérivation d'un segment selon l'invention,
- la figure 6 représente schématiquement un point de dérivation d'un segment sur lequel est connecté un équipement secondaire.

Une infrastructure de communication informatique locale fonctionnant sous un protocole permettant le transfert de données par fibres optiques tel que par exemple Ethernet, ATM ou "Token Ring" comporte en tête un concentrateur principal 1, par exemple actif, présentant des connexions d'entrée 10 pour recevoir différentes entrées, notamment optiques, provenant de serveurs et des connexions de sortie 11 transmettant des signaux optiques, par exemple en parallèle, sur plusieurs fibres optiques d'une ligne de transmission. Les connexions de sortie 11 sont des connecteurs multi-fibres de type MPO (Multi-fibbers Push-On), MF ou MTP (marque déposée) adaptés à la connectique MPO (Multi-fibbers Push-On), MF ou MTP (marque déposée) de la ligne de transmission. Les connecteurs MTP, MF et MPO étant bien connus, ils ne sont pas décrits dans cette demande.

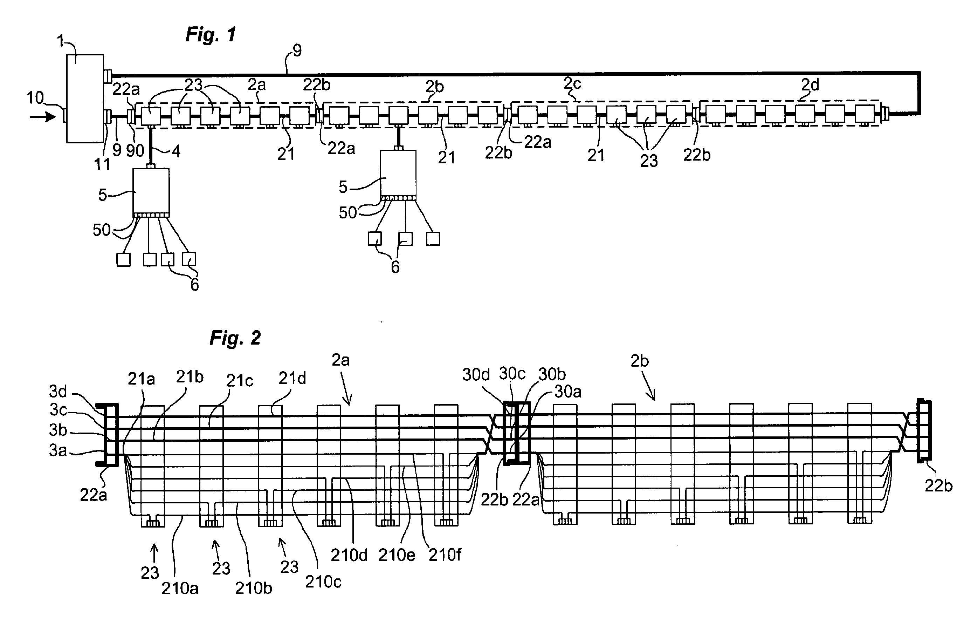

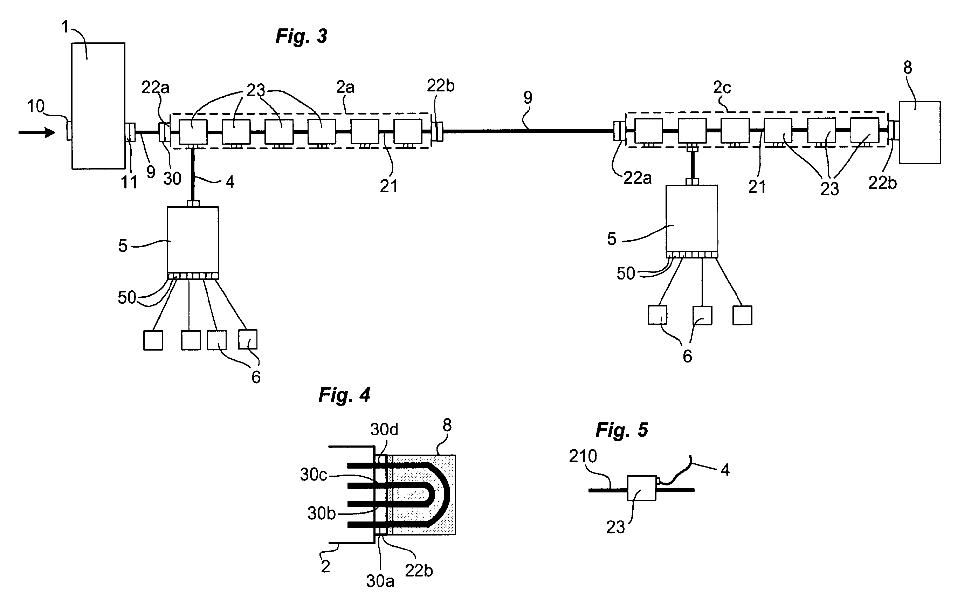

Selon l'invention, la ligne de transmission en fibres optiques est composée de plusieurs segments 2a, 2b, 2c, 2d (ci-après 2) identiques en fibres optiques connectés bout à bout (figure 1) ou éventuellement reliés entre eux par un ou plusieurs câbles optiques de transport 9 (figure 3). Les fibres optiques employées sont par exemple de type OM2.

En référence à la figure 2, chaque segment 2 de câble est par exemple constitué d'un câble ou d'un conduit souple, traversé suivant son axe par plusieurs groupes 21 a, 21 b, 21 c, 21d (ci-après 21) de fibres optiques parallèles, par exemple quatre groupes 21 de fibres optiques. Chaque groupe 21 de fibres optiques comporte une même quantité de fibres optiques, par exemple six fibres optiques 210a, 210b, 210c, 210d, 210e, 210f (ci-après 210). L'arrangement des groupes 21 de fibres optiques dans un conduit peut notamment présenter des avantages dans le procédé de fabrication du segment 2 de l'invention.

Le segment 2 présente à chacune de ses extrémités un premier connecteur 22a et un second connecteur 22b regroupant chacun les fibres optiques 210 du segment. Ces deux connecteurs d'extrémité 22a, 22b sont des connecteurs multi-fibres par exemple de type MPO (pour "Multi-fibers Push On"), MF ou MTP. L'un des deux connecteurs d'extrémité 22a, 22b est par exemple un connecteur mâle tandis que l'autre connecteur d'extrémité est un connecteur femelle, de sorte que les deux connecteurs 22a, 22b présentent des zones de connexion 3a, 3b, 3c, 3d, 30a, 30b, 30c, 30d complémentaires (figure 2). Le premier connecteur 22a situé en tête permet de connecter le segment 2a directement sur un connecteur 11 complémentaire du concentrateur principal 1 ou sur un connecteur complémentaire 90 d'un câble optique de transport 9 multi-fibres (figure 1). Le second connecteur 22b du segment 2a est apte à recevoir le connecteur 22a complémentaire d'un segment 2b identique adjacent (figure 1) ou celui d'un câble optique de transport 9 menant par exemple à un autre segment 2c (figure 3). Si un segment 2 conduit quatre groupes 21 de six fibres optiques 210 chacun, les connecteurs d'extrémité 22a, 22b de chaque segment 2 et les connecteurs des câbles optique de transport 9 sont à vingt-quatre fibres.

Un câble optique de transport 9 est un câble ininterrompu présentant des connecteurs multi-fibres par exemple de type MPO, MF ou MTP adaptés notamment aux connecteurs d'extrémités 22a, 22b des segments 2 et aux connexions de sortie 11 du concentrateur principal 1.

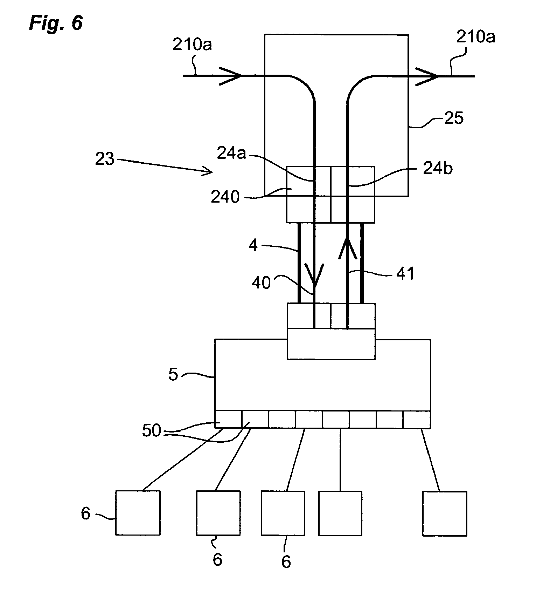

Sur un segment 2a de câble, les fibres optiques 210 d'un seul groupe 21 a sont dérivées (figure 2). Les fibres optiques des autres groupes 21 b, 21 c, 21 d sont continues le long du segment 2a. Dans le groupe 21 a de fibres dérivées, chaque fibre optique 210a, 210b, 210c, 210d, 210e, 210f du groupe est interrompue une fois de manière à former un point de dérivation 23 à deux terminaisons optiques 24a, 24b, une terminaison de la fibre optique entrante et une terminaison de la fibre optique sortante (figure 6).

Les terminaisons optiques 24a, 24b sont reliées à des connexions optiques comportant par exemple un connecteur optique distinct monofibre pour chaque terminaison 24a, 24b ou un connecteur optique commun 240 à deux fibres regroupant les deux terminaisons 24a, 24b comme représenté en figure 6. Ces connexions optiques sont logées dans un boîtier 25 monté sur le segment 2a.

Selon l'invention, la dérivation de chaque fibre optique 210 peut être orientée perpendiculairement au câble (figures 1 et 3) ou parallèlement à celui-ci (figure 5) selon l'orientation du connecteur optique 240 dans le boîtier 25.

Un câble 4 du type jarretière optique présentant deux fibres optiques 40, 41 et menant par exemple à un équipement secondaire 5 pouvant également être actif, peut ainsi être connecté à chacun des points de dérivation 23 d'un segment 2 (figures 1, 3 et 6). Ce câble 4 présente une connectique complémentaire de celle des connexions optiques d'un point de dérivation 23 d'un segment 2. Sur les figures 1 et 3, chaque équipement secondaire 5 connecté en un point de dérivation 23 d'un segment 2 est un équipement d'une topologie de type étoile simple.

Les points de dérivation 23 sont échelonnés le long du segment 2 de câble. Chaque segment 2 comporte par exemple quatre groupes 21 de six fibres optiques chacun et donc au moins six points de dérivations 23 répartis sur toute sa longueur. Sur chaque segment 2, il est donc possible de connecter six équipements secondaires 5. Chaque équipement secondaire 5 comporte par exemple huit ports 50 permettant chacun de relier directement un terminal informatique 6 ou éventuellement plusieurs terminaux informatiques (non représenté).

Bien entendu, on peut prévoir de réaliser un segment 2 présentant plus ou moins de quatre groupes 21 de fibres optiques 210 avec plus ou moins de six fibres optiques par groupe. Le nombre de groupes de fibres ainsi que la quantité de fibres par groupe devront être adaptés aux types de connecteurs d'extrémité disponibles.

Selon l'invention, chaque segment 2 comporte un ou plusieurs groupes 21 b, 21 c, 21 d de fibres optiques continues le long du segment, par exemple trois sur la figure 2, et un groupe 21 a de fibres optiques dérivées dans lequel, comme décrit ci-dessus, chaque fibre optique 210 du groupe est dérivée une fois.

Selon l'invention, le premier connecteur d'extrémité 22a d'un segment 2 comporte des zones de connexion 3a, 3b, 3c, 3d complémentaires de zones de connexion 30a, 30b, 30c, 30d du second connecteur d'extrémité 22b de manière à pouvoir mettre bout à bout plusieurs segments 2 identiques (figure 1) éventuellement reliés entre eux par des câbles optiques de transport 9. Chaque zone de connexion comprend par exemple plusieurs points de connexion, chaque point de connexion étant associé à une fibre optique.

Dans un segment, les groupes 21 de fibres optiques sont reliées aux deux connecteurs d'extrémité 22a, 22b de sorte que, si plusieurs segments 2a, 2b 2c, 2d de câble identiques sont mis bout à bout, un groupe 21a dont les fibres optiques sont dérivées dans un segment 2a se prolonge dans les segments adjacents 2b, 2c, 2d par des fibres optiques continues.

Plus précisément, en référence à la figure 2, dans chaque segment 2, un premier groupe 21 d de fibres optiques continues est d'une part reliée à la première zone de connexion 3d du premier connecteur d'extrémité 22a et d'autre part à la deuxième zone de connexion 30c du second connecteur d'extrémité 22b. Un deuxième groupe 21 c de fibres optiques continues est relié d'une part à la deuxième zone de connexion 3c du premier connecteur d'extrémité 22a et d'autre part à la troisième zone de connexion 30b du second connecteur d'extrémité 22b. Un troisième groupe 21 b de fibres optiques continues est relié d'une part à la troisième zone de connexion 3b du premier connecteur d'extrémité 22a et d'autre part à la quatrième zone de connexion 30a du second connecteur d'extrémité 22b. Enfin, le groupe 21 a de fibres optiques dérivées est relié d'une part à la quatrième zone de connexion 3a du premier connecteur d'extrémité 22a et d'autre part à la première zone de connexion 30d du second connecteur d'extrémité 22b.

Il résulte de cet agencement que, à chaque nouveau segment 2 connecté, les groupes 21 de fibres optiques se décalent les uns par rapport aux autres. Ainsi, dans une ligne de transmission comportant quatre segments 2a, 2b, 2c, 2d mis bout à bout (figure 1), le premier groupe 21 d de fibres continues du premier segment 2a est connecté au second groupe de fibres continues 21 c du deuxième segment, qui est lui même connecté au troisième groupe de fibres continues 21 b du troisième segment 2c et qui est lui même connecté au groupe 21 a de fibres dérivées du quatrième segment 2d. De même le second groupe 21 c de fibres continues du premier segment 2a est connecté au troisième groupe 21 b de fibres continues du second segment 2b, qui est lui même connecté au groupe 21 a de fibres dérivées du troisième segment 2d et qui est lui même connecté au premier groupe 21d de fibres continues du quatrième segment. Le troisième groupe 21 b de fibres continues du premier segment 2a est connecté au groupe 21 a de fibres dérivées du second segment, qui est lui même connecté au premier groupe 21 d de fibres continues du troisième segment et qui est lui même connecté au deuxième groupe 21c de fibres continues du quatrième segment 2d. Le groupe 21a de fibres dérivées du premier segment 2a est connecté au premier groupe 21 d de fibres continues du deuxième segment 2b, qui est lui même connecté au deuxième groupe 21 c de fibres continues du troisième segment 2c et qui est lui même connecté au troisième groupe 21 b de fibres continues du quatrième segment 2d.

Un tel agencement des groupes 21 de fibres optiques dans un segment 2 permet de réaliser facilement une ligne de transmission optique composée de plusieurs segments 2a, 2b, 2c, 2d identiques mis bout à bout ou éventuellement reliés entre eux par un ou plusieurs câbles optiques de transport 9 (figure 3).

Le long d'une ligne de transmission composée de plusieurs segments 2, chaque fibre optique 210 d'un groupe ne peut être dérivée qu'une seule fois ce qui permet de garantir le respect de la topologie étoile et une conformité à la norme vers chaque équipement secondaire 5 connecté sur un point de dérivation 23. La ligne de transmission ne peut comporter plus de segments 2 que de groupes 21 de fibres optiques présents dans un segment 2. Sur la figure 2, les segment 2a, 2b comportent chacun quatre groupes 21 a, 21 b, 21 c, 21 d de fibres optiques, la ligne de transmission ne peut donc comporter au maximum que quatre segments 2a, 2b, 2c, 2d connectés bout à bout ou éventuellement reliés entre eux par un ou plusieurs câbles optiques 9 de transport (figure 1).

Une infrastructure de communication incluant un ou plusieurs segments 2 selon l'invention peut être réalisée selon les variantes suivantes :

Selon une première variante de réalisation représentée en figure 1, le concentrateur 1 est connecté à la ligne de transmission et envoie des signaux sur les fibres optiques de la ligne, la ligne de transmission est rebouclée à l'aide d'un câble optique de transport multi-fibres 9 connecté sur le connecteur d'extrémité 22b du segment de queue 2d pour raccorder la ligne de transmission au concentrateur principal 1 et ainsi véhiculer les signaux sortants des équipements secondaires 5 vers le concentrateur principal 1. Dans cette variante, chaque équipement secondaire connecté est un équipement d'une topologie de type étoile simple.

Selon une deuxième variante de réalisation représentée en figures 3 et 4, il est possible de prévoir, à l'extrémité de la ligne de transmission ainsi bâtie, un connecteur 8 de bouclage connecté sur le connecteur d'extrémité 22b du segment de queue 2c. Ce type de connecteur 8 peut permettre de s'affranchir du câble de transport 9 prévu pour le retour lorsque tous les segments 2 ne sont pas déployés. Ce connecteur de bouclage 8 permet de relier les fibres optiques entre elles, deux à deux. En référence à la figure 4, par l'intermédiaire de ce connecteur 8 de bouclage, les fibres optiques d'un groupe 21 connectées à la première zone de connexion 30d du connecteur d'extrémité 22b sont reliées aux fibres optiques d'un autre groupe 21 connectées à la quatrième zone de connexion 30a de ce connecteur d'extrémité 22b et les fibres optiques d'un groupe 21 connectées à la deuxième zone de connexion 30c du connecteur d'extrémité sont reliées aux fibres optiques d'un autre groupe 21 connectées à la troisième zone de connexion 30b du connecteur d'extrémité 22b. Afin de pouvoir assurer le retour de signaux vers le concentrateur principal 1, le connecteur 8 ne pourra être utilisé que lorsque la ligne de transmission comporte un nombre de segments 2 au plus égal à la moitié du nombre de groupes 21 fibres optiques dans un segment 2. Dans cette variante, chaque équipement secondaire connecté est un équipement d'une topologie de type étoile simple.

Il est bien entendu que l'on peut, sans sortir du cadre de l'invention, défini par les revendications annexées, imaginer d'autres variantes et perfectionnements de détail et de même envisager l'emploi de moyens équivalents.

## Revendications

1. Segment (2) de câble pour une infrastructure de communication, comprenant
- plusieurs groupes (21) de fibres optiques, les groupes comportant chacun une même quantité de fibres optiques (210),
- un premier connecteur (22a) situé à une extrémité du segment (2), présentant des zones de connexion (3a, 3b, 3c, 3d),
- un second connecteur (22b) situé à l'autre extrémité du segment (2) présentant des zones de connexion complémentaires (30a, 30b, 30c, 30d) de celles du premier connecteur (22a), les premiers et seconds connecteurs (22a, 22b) regroupant chacun l'ensemble des fibres optiques (210), **caractérisé en ce que** les groupes (21) de fibres optiques comportent :
- un ou plusieurs groupes (21 b, 21 c, 21 d) de fibres optiques continues le long du segment,
- un groupe (21a) de fibres optiques dérivées, chaque fibre optique (210) de ce groupe étant interrompue une fois de manière à former un point de dérivation (23) du segment, et **en ce que**
- le premier connecteur (22a) présente une première zone de connexion (3a) reliée au groupe (21a) de fibres dérivées, la zone de connexion complémentaire (30a) à cette première zone de connexion sur le second connecteur (22b) étant reliée à un groupe (21 b) de fibres continues,
- le premier connecteur (22b) présente une deuxième zone de connexion (3d) reliée à un groupe (21 d) de fibres continues, la zone de connexion complémentaire (30d) à cette deuxième zone de connexion sur le second connecteur étant reliée au groupe (21 a) de fibres dérivées.

2. Segment selon la revendication 1, **caractérisé en ce que**, à chaque point de dérivation (23), la fibre optique interrompue présente deux terminaisons (24a, 24b) optiques réunies dans un connecteur (240) commun.

3. Segment selon la revendication 1 ou 2, **caractérisé en ce que**, au point de dérivation (23), la dérivation est réalisée perpendiculairement ou parallèlement au segment de fibres optiques.

4. Segment selon l'une des revendications 1 à 3, **caractérisé en ce que** les premier et second connecteurs (22a, 22b) sont multi-fibres.

5. Segment selon l'une des revendications 1 à 4, **caractérisé en ce qu'**il comporte quatre groupes (21a, 21b, 21c, 21d) de six fibres optiques (210a, 210b, 210c, 210d, 210e, 210f) chacun.

6. Segment selon l'une des revendications 1 à 5, **caractérisé en ce que** l'infrastructure de communication est de type étoile simple.

7. Infrastructure de communication, **caractérisé en ce qu'**il comporte au moins un concentrateur (1) relié à une première extrémité d'une ligne de transmission comprenant au moins un segment (2) de câble selon l'une des revendications 1 à 6, ledit concentrateur étant apte à envoyer des données sur les fibres optiques (210) de chaque groupe (21) de la ligne de transmission.

8. Infrastructure selon la revendication 7, **caractérisé en ce que** la ligne de transmission présente une seconde extrémité raccordée au concentrateur (1) par un câble optique de transport (9).

9. Infrastructure selon la revendication 7, **caractérisé en ce que** la ligne de transmission présente une seconde extrémité à laquelle les groupes (21) de fibres optiques sont raccordées deux par deux par l'intermédiaire d'un connecteur (8) de bouclage.

10. Infrastructure selon l'une des revendications 7 à 9, **caractérisé en ce que** le concentrateur (1) comporte un connecteur multi-fibres (11) pour connecter une extrémité de la ligne de transmission.

11. Infrastructure selon l'une des revendications 7 à 10, **caractérisé en ce que** la ligne de transmission comporte plusieurs segments (2a, 2b, 2c, 2d) connectés bout à bout ou connectés entre eux par l'intermédiaire d'un ou plusieurs câbles de transport (9).

12. Infrastructure selon l'une des revendications 7 à 11, **caractérisé en ce qu'**elle est de type étoile simple.

## Claims

1. Cable segment (2) for a communication infrastructure, comprising:
- several groups (21) of optical fibres, the groups each comprising one and the same quantity of optical fibres (210),
- a first connector (22a) situated at one end of the segment (2), presenting connection zones (3a, 3b, 3c, 3d),
- a second connector (22b) situated at the other end of the segment (2) presenting connection zones (30a, 30b, 30c, 30d) complementary to those of the first connector (22a), the first and second connectors (22a, 22b) each grouping together the set of optical fibres (210), wherein the groups (21) of optical fibres comprise:
- one or more groups (21 b, 21 c, 21 d) of continuous optical fibres along the segment,
- a group (21a) of tap-off optical fibres, each optical fibre (210) of this group being interrupted once so as to form a tapping point (23) of the segment, and in that
- the first connector (22a) presents a first connection zone (3a) linked to the group (21 a) of tap-off fibres, the connection zone (30a) complementary to this first connection zone on the second connector (22b) being linked to a group (21 b) of continuous fibres,
- the first connector (22b) presents a second connection zone (3d) linked to a group (21d) of continuous fibres, the connection zone (30d) complementary to this second connection zone on the second connector being linked to the group (21a) of tap-off fibres.

2. Segment according to Claim 1, wherein, at each tapping point (23), the interrupted optical fibre presents two optical terminations (24a, 24b) united in a common connector (240).

3. Segment according to Claim 1 or 2, wherein, at the tapping point (23), the tapping is carried out perpendicularly or parallel to the segment of optical fibres.

4. Segment according to one of Claims 1 to 3, wherein the first and second connectors (22a, 22b) are multi-fibre.

5. Segment according to one of Claims 1 to 4, wherein it comprises four groups (21 a, 21 b, 21 c, 21 d) of six optical fibres (210a, 210b, 210c, 210d, 210e, 210f) each.

6. Segment according to one of Claims 1 to 5, wherein the communication infrastructure is of simple star type.

7. Communication infrastructure, wherein it comprises at least one hub (1) linked to a first end of a transmission line comprising at least one cable segment (2) according to one of Claims 1 to 6, the said hub being able to send data on the optical fibres (210) of each group (21) of the transmission line.

8. Infrastructure according to Claim 7, wherein the transmission line presents a second end joined to the hub (1) by an optical transport cable (9).

9. Infrastructure according to Claim 7, wherein the transmission line presents a second end to which the groups (21) of optical fibres are linked two by two by way of a looping connector (8).

10. Infrastructure according to one of Claims 7 to 9, wherein the hub (1) comprises a multi-fibre connector (11) for connecting one end of the transmission line.

11. Infrastructure according to one of Claims 7 to 10, wherein the transmission line comprises several segments (2a, 2b, 2c, 2d) connected end to end or interconnected by way of one or more transport cables (9).

12. Infrastructure according to one of Claims 7 to 11, wherein it is of simple star type.

## Patentansprüche

1. Kabelsegment (2) für eine Kommunikationsinfrastruktur, das aufweist:
- mehrere Gruppen (21) von Lichtleitfasern, wobei die Gruppen je die gleiche Menge von Lichtleitfasern (210) aufweisen,
- einen an einem Ende des Segments (2) befindlichen ersten Steckverbinder (22a), der Anschlusszonen (3a, 3b, 3c, 3d) aufweist,
- einen am anderen Ende des Segments (2) befindlichen zweiten Steckverbinder (22b), der komplementäre Anschlusszonen (30a, 30b, 30c, 30d) zu denjenigen des ersten Steckverbinders (22a) aufweist, wobei die ersten und die zweiten Steckverbinder (22a, 22b) je die Gesamtheit der Lichtleitfasern (210) umfassen, **dadurch gekennzeichnet, dass** die Gruppen (21) von Lichtleitfasern aufweisen:
- eine oder mehrere Gruppen (21b, 21c, 21d) von durchgehenden Lichtleitfasern entlang des Segments,
- eine Gruppe (21a) von abgezweigten Lichtleitfasern, wobei jede Lichtleitfaser (210) dieser Gruppe einmal unterbrochen wird, um einen Abzweigpunkt (23) des Segments zu bilden, und dass
- der erste Steckverbinder (22a) eine erste Anschlusszone (3a) hat, die mit der Gruppe (21a) von abgezweigten Fasern verbunden ist, wobei die zu dieser ersten Anschlusszone komplementäre Anschlusszone (30a) auf dem zweiten Steckverbinder (22b) mit einer Gruppe (21b) von durchgehenden Fasern verbunden ist,
- der erste Steckverbinder (22a) eine zweite Anschlusszone (3d) hat, die mit einer Gruppe (21d) von durchgehenden Fasern verbunden ist, wobei die zu dieser zweiten Anschlusszone komplementäre Anschlusszone (30d) auf dem zweiten Steckverbinder mit der Gruppe (21a) von abgezweigten Fasern verbunden ist.

2. Segment nach Anspruch 1, **dadurch gekennzeichnet, dass** die unterbrochene Lichtleitfaser an jedem Abzweigpunkt (23) zwei optische Abschlüsse (24a, 24b) aufweist, die in einem gemeinsamen Steckverbinder (240) vereint sind.

3. Segment nach Anspruch 1 oder 2, **dadurch gekennzeichnet, dass** am Abzweigpunkt (23) die Abzweigung lotrecht oder parallel zum Segment von Lichtleitfasern hergestellt wird.

4. Segment nach einem der Ansprüche 1 bis 3, **dadurch gekennzeichnet, dass** der erste und der zweite Steckverbinder (22a, 22b) Mehrfaser-Steckverbinder sind.

5. Segment nach einem der Ansprüche 1 bis 4, **dadurch gekennzeichnet, dass** es vier Gruppen (21a, 21b, 21c, 21d) von je sechs Lichtleitfasern (210a, 210b, 210c, 210d, 210e, 210f) aufweist.

6. Segment nach einem der Ansprüche 1 bis 5, **dadurch gekennzeichnet, dass** die Kommunikationsinfrastruktur vom Typ einfacher Stern ist.

7. Kommunikationsinfrastruktur, **dadurch gekennzeichnet, dass** sie mindestens einen Konzentrator (1) aufweist, der mit einem ersten Ende einer Übertragungsleitung verbunden ist, die mindestens ein Kabelsegment (2) nach einem der Ansprüche 1 bis 6 aufweist, wobei der Konzentrator in der Lage ist, Daten auf den Lichtleitfasern (210) jeder Gruppe (21) der Übertragungsleitung zu senden.

8. Infrastruktur nach Anspruch 7, **dadurch gekennzeichnet, dass** die Übertragungsleitung ein zweites Ende aufweist, das mit dem Konzentrator (1) über ein Transport-Lichtleiterkabel (9) verbunden ist.

9. Infrastruktur nach Anspruch 7, **dadurch gekennzeichnet, dass** die Übertragungsleitung ein zweites Ende aufweist, mit dem die Gruppen (21) von Lichtleitfasern paarweise über einen Durchschleifsteckverbinder (8) verbunden sind.

10. Infrastruktur nach einem der Ansprüche 7 bis 9, **dadurch gekennzeichnet, dass** der Konzentrator (1) einen Mehrfaser-Steckverbinder (11) aufweist, um ein Ende der Übertragungsleitung anzuschließen.

11. Infrastruktur nach einem der Ansprüche 7 bis 10, **dadurch gekennzeichnet, dass** die Übertragungsleitung mehrere Segmente (2a, 2b, 2c, 2d) aufweist, die End-zu-End angeschlossen oder aneinander über ein oder mehrere Transportkabel (9) angeschlossen sind.

12. Infrastruktur nach einem der Ansprüche 7 bis 11, **dadurch gekennzeichnet, dass** die Infrastruktur vom Typ einfacher Stern ist.
